# EUROPEAN PATENT SPECIFICATION

(11) **EP 0 402 002 B1**
(45) Date of publication and mention of the grant of the patent: **17.05.1995**
(21) Application number: 90305551.5
(22) Date of filing: 22.05.1990
(51) Int. Cl.: G11B 20/18, G11B 7/013, G11B 7/24

(54) **Check discs**
Testscheiben
Disques de test

(30) Priority: 05.06.1989 JP 142322/89; 05.06.1989 JP 142321/89
(43) Date of publication of application: 12.12.1990
(73) Proprietor: SONY CORPORATION, Tokyo 141 (JP)
(72) Inventor: Ishimura, Noriyuki, c/o Patents Division Sony Corp, Tokyo 141 (JP); Yokoyama, Katsuji, c/o Patents Division Sony Corp, Tokyo 141 (JP)
(74) Representative: Cotter, Ivan John

(56) References cited:
- EP-A- 0 166 614
- WO-A-85/01381
- FUNKSCHAU, vol. 60, no. 23, 4th November 1988, pages 38-40, Munich, DE; W.SCHILD: "Fehler vom Player, Fehler von der Platte"
- IBM TECHNICAL DISCLOSURE BULLETIN, vol. 28, no. 4, September 1985, pages 1786-1787, New York, US; "Laser scribing magnetic defects on disks"
- EBU REVIEW, no. 227, February 1988, pages 2-6, Brussels, BE; H. JAKUBOWSKI etal.: "SQAM - The EBU compact disc for subjective assessments of audio systems"
- PATENT ABSTRACTS OF JAPAN, vol. 12, no. 188 (P-711)[3035], 2nd June 1988;& JP-A-62 295 234 (MATSUSHITA ELECTRIC IND. CO., LTD) 22-12-1987
- PATENT ABSTRACTS OF JAPAN, vol. 9, no. 177 (P-375)[2900], 23rd July 1985;& JP-A-60 50 641 (TDK K.K.) 20-03-1985

## Description

This invention relates to check discs, for use, for example, with compact disc players.

Previously proposed check discs have a music signal recorded thereon in the usual form, and are also provided with black dots on the information read-out surface to simulate defects such as foreign material incorporated at the time of disc substrate moulding, fingerprints, abrasions or stains resulting, for example, from repeated spraying of the disc with anti-static spray.

Such a check disc can be used to check the operation of a disc player with a defective disc, but does not enable the effect of different forms of defect to be distinguished, and not is it possible to relate the simulated defects to specific tracks of the check disc.

Published International Patent Application No. WO 85/01381 discloses a preformatted diagnostic recording disc for providing diagnostic information to a disc storage and retrieval device in the automatic performance of diagnostic routines to verify proper device operation. The disc has course seek/clocking tracks and a plurality of information tracks each having a specific data pattern designed to test for a specific device function.

Funkschau, Vol. 60, No. 23, 4 November 1988, Munchen, Germany, (W Schild), describes error test discs having black dots of varying diameter at locations on the information track. On one disc, music is recorded on the information track. On another disc, a testing tone of 400 Hz is recorded on the information track.

According to the present invention there is provided an optical check disc characterised in that the disc has semi-transparent coatings simulating defects at a plurality of predetermined positions on the information read-out surface.

By providing semi-transparent coatings, characteristics similar to the case where abrasions occur on the information read-out surface of the disc or where the whole disc surface is stained can be simulated. With embodiments of the invention it is possible accurately to check a change in the reproduction due to a specific defect, for example of a predetermined size, or in the form of fine abrasions, or staining of the whole disc. Moreover, the reproduction can be checked whilst maintaining conditions other than the simulated defect unchanged.

The invention will now be described by way of example with reference to the accompanying drawings, throughout which like parts are referred to by like references, and in which:
Figure 1 is a plan view of an embodiment of check disc according to the present invention;
Figures 2 and 3 are a diagram and a table for describing the embodiment;
Figure 4 is a sectional view of the embodiment;
Figures 5A and 5B are waveform diagrams.

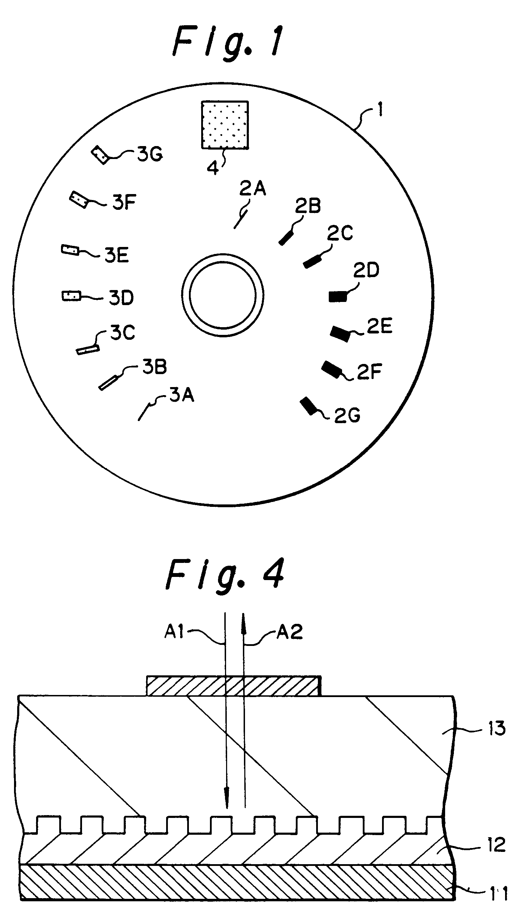

Figure 1 shows the information read-out surface of an embodiment of check disc 1 according to the present invention. The disc 1 has a shape similar to a compact disc with an outer diameter of, for example, 8 or 12 cm, and a check signal is recorded on the disc 1 as a line of pits, as on a compact disc. Various simulated defects are formed on the information read-out surface of the disc 1 corresponding to possible physical defects.

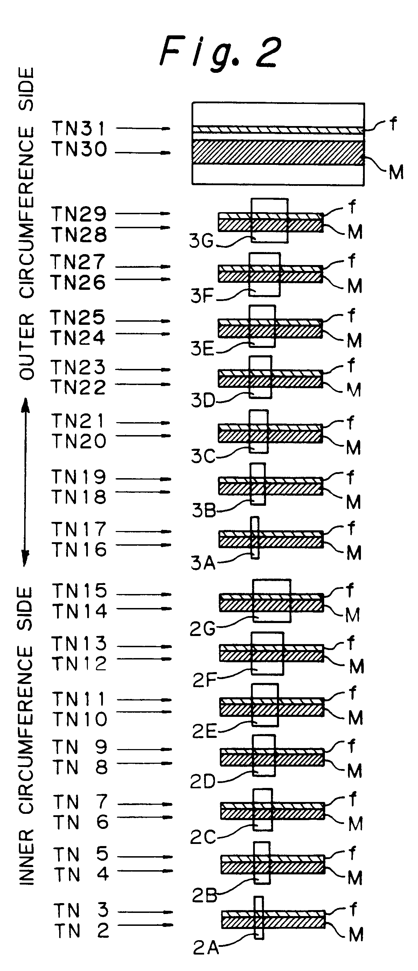

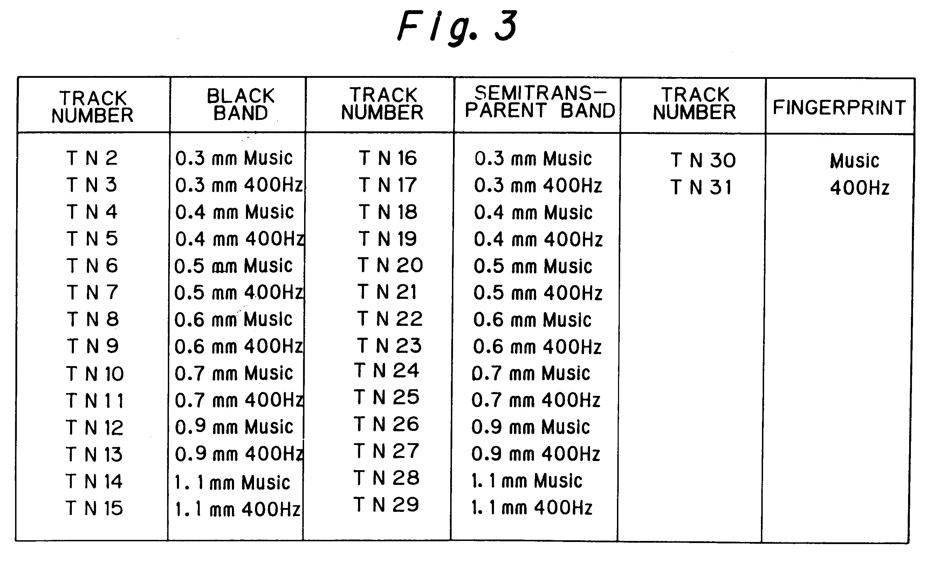

Figures 2 and 3 show signals recorded in respective numbered tracks of the disc 1, and simulated defects formed at predetermined positions of the respective tracks. In the disc 1 corresponding to Figures 2 and 3, a music signal M is recorded in each of tracks TN2, TN4, TN6, ..., TN30, and a single frequency signal f of a frequency of, for example, 400 Hz, is recorded in the adjacent subsequent tracks TN3, TN5, TN7, ..., TN31.

Black bands 2A to 2G with respective different widths are formed at positions corresponding to the tracks TN2 to TN15 on the information read-out surface of the disc 1, semi-transparent bands 3A to 3G with respective different widths are formed at positions corresponding to the tracks TN16 to TN29, and a simulated fingerprint 4 is provided at the position corresponding to the tracks TN30 and TN31.

The black bands 2A to 2G are simulated defects consisting of a black coating, and correspond to defects due to foreign materials incorporated at the time of disc substrate moulding. As shown in Figure 3, the widths of the bands 2A to 2G are made so that the band 2A lying on the innermost tracks TN2 and TN3 has width of 0.3 mm, the next band 2B has a width of 0.4 mm, the bands 2C to 2F have widths of 0.5 mm, 0.6 mm, 0.7 mm, 0.8 mm, 0.9 mm and 1.1 mm respectively so as sequentially to widen towards the outer circumference, while the band 2G lying on the tracks TN14 and TN15 has a width of 1.1 mm.

The semi-transparent bands 3A to 3G are simulated defects consisting of a semi-transparent coating, for example, of red colour, and the bands 3A to 3G correspond to defects due to fine abrasions on the information read-out surface of the disc 1 and defects due to staining of the whole disc 1. As shown in Figure 3, the widths of the bands 3A to 3G are made so that the band 3A lying on the track TN16 and TN17 has a width of 0.3 mm, the next band 3B has a width of 0.4 mm, the bands 3C to 3F have widths of 0.5 mm, 0.6 mm, 0.7 mm, 0.8 mm, 0.9 mm and 1.1 mm, respectively, so as sequentially to widen towards the outer circumference, while the band 3G lying on the tracks TN28 and TN29 has a width of 1.1 mm.

The fingerprint 4 is a simulated defect corresponding to a fingerprint on the information read-out surface.

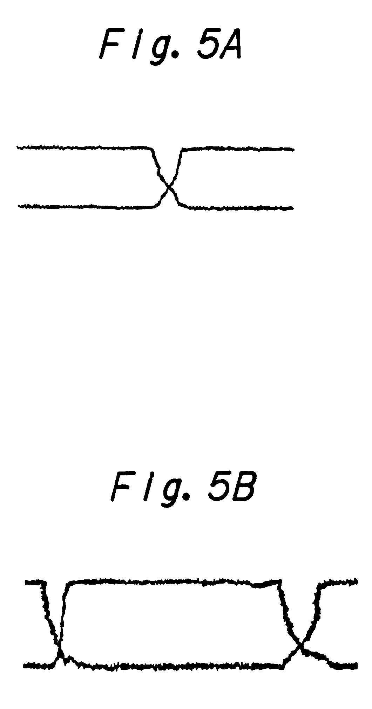

As shown in Figure 4, the semi-transparent bands 3A to 3G are formed by printing on the information read-out surface of the disc 1 in semi-transparent ink composed, for example, of soft and hard vinyl chloride or polycarbonate, to simulate defects such as erosion, discolouration, deformation or retardation of drying. In this sectional view of the disc 1, there is shown a protective film 11, an aluminium reflective film 12, and a disc substrate 13 formed of polycarbonate. The transmissivity of the semi-transparent ink for forming the bands 3A to 3G is set in a range of 30% to 60% with the centre of 45%, for a beam A2 reflected by the aluminium reflective film 12. The effect of the bands 3A to 3G is similar to that resulting from abrasions on the information read-out surface of the disc 1. More specifically, Figure 5A shows a playback RF signal when such a semi-transparent band having a width of 0.6 mm is formed on a disc, while Figure 5B shows a playback RF signal when abrasions actually occur on the information read-out surface of a disc. Comparison of Figures 5A and 5B indicates that the characteristics are similar.

The semi-transparent bands 3A to 3G may be formed by melting, evaporation or bonding.

By providing the semi-transparent bands 3A to 3G on the disc 1, characteristics similar to the case where abrasions occur on the information read-out surface of the disc or where the whole disc surface is stained can be simulated.

A music signal M is recorded in each of the tracks TN2, TN4, TN6, ..., TN30 of the disc 1. The single frequency signal f of the frequency of 400 Hz, for example, is recorded on the subsequent tracks TN3, TN5, TN7, ..., TN31. As a result, noise due to the defects can be confirmed easily. Also, since a similar single frequency signal is associated with the black bands 2A to 2G and the semi-transparent bands 3A to 3G, which are different from one another, the resulting noise can easily be compared.

Moreover, since only one kind of simulated defect is provided in a given track, simulation of the operation of a disc player when such defects are present in the given positions of the corresponding tracks can be performed immediately by reproducing designated tracks.

The invention is not limited to a check disc for a compact disc for music, and is similarly applicable to a check disc for other disc players, such as, for example, a playback apparatus of a CD-ROM on which digital data are recorded.

Thus, with embodiments of the invention, by checking the playback of the 400 Hz frequency signal the change in playback due to defects can be checked. Also, because only one kind of simulated defect is formed in any given track, the effect of different kinds of defect can readily be simulated.

## Claims

1. An optical check disc (1) characterised in that the disc (1) has semi-transparent coatings (3) simulating defects at a plurality of predetermined positions on the information read-out surface.

2. A disc (1) according to claim 1 wherein said semi-transparent coatings (3) comprise semi-transparent ink.

3. A disc (1) according to claim 1 or claim 2 wherein said semi-transparent coatings (3) are of various different sizes.

4. A disc (1) according to claim 3 wherein said semi-transparent coatings (3) are arranged in a circular arc and are of sizes which increase from the inner to the outer circumference of the disc (1).

5. A disc (1) according to any preceding claim wherein the light transmissibility of said semi-transparent coatings (3) is 30 to 60%.

6. A disc (1) according to any preceding claim wherein a single frequency signal is recorded in tracks (TN17, TN19, TN21, etc.) adjacent to the information signal tracks (TN16, TN18, TN20, etc.) where said semi-transparent coatings (3) are provided, each semi-transparent coating being formed on a said information signal track and the adjacent single frequency track.

## Patentansprüche

1. Optische Testplatte (1),
**dadurch gekennzeichnet,**
daß die Platte (1) an mehreren vorbestimmten Stellen auf der Informations-Auslesefläche halbdurchlässige Beschichtungen (3) besitzt, die Fehler simulieren.

2. Platte (1) nach Anspruch 1, bei der die halbdurchlässigen Beschichtungen (3) halbdurchlässige Tinte aufweisen.

3. Platte (1) nach Anspruch 1 oder 2, bei der die halbdurchlässigen Beschichtungen (3) unterschiedliche Größen haben.

4. Platte (1) nach Anspruch 3, bei der die halbdurchlässigen Beschichtungen (3) in einem Kreisbogen angeordnet sind und ihre Größen vom Innen- zum Außenumfang der Platte (1) zunehmen.

5. Platte (1) nach einem der vorhergehenden Ansprüche, bei der die Lichtdurchlässigkeit der halbdurchlässigen Beschichtungen (3) 30 bis 60% beträgt.

6. Platte (1) nach einem der vorhergehenden Ansprüche, bei der ein Einfrequenzsignal in Spuren (TN17, TN19, TN21 usw.) aufgezeichnet ist, die den Informationssignalspuren (TN16, TN18, TN20 usw.) benachbart sind, in denen die halbdurchlässigen Beschichtungen (3) vorgesehen sind, wobei jede der halbdurchlässigen Beschichtungen auf der genannten Informationssignalspur und der benachbarten Einfrequenzspur ausgebildet ist.

## Revendications

1. Disque de contrôle optique (1), caractérisé en ce que le disque (1) présente des révêtements semi-transparents (3) simulant des défauts en une pluralité d'endroits prédéterminés sur la surface de lecture d'information.

2. Disque (1) selon la revendication 1, dans lequel lesdits revêtements semi-transparents (3) comportent une encre semi-transparente.

3. Disque (1) selon la revendication 1 ou la revendication 2, dans lequel lesdits revêtements semi-transparents (3) sont de différentes dimensions.

4. Disque (1) selon la revendication 3, dans lequel lesdits revêtements semi-transparents (3) sont disposés selon un arc de cercle et sont de dimensions qui croissent depuis la circonférence intérieure vers la circonférence extérieure du disque (1).

5. Disque (1) selon l'une quelconque des revendications précédentes, dans lequel le pouvoir de transmission de lumière desdits revêtements semi-transparents (3) est compris entre 30 et 60%.

6. Disque (1) selon l'une quelconque des revendications précédentes, dans lequel un signal à fréquence unique est enregistré sur les pistes (TN17, TN19, TN21, etc.) adjacentes aux pistes de signal d'information (TN16, TN18, TN20, etc.) où lesdits revêtements semi-transparents (3) sont prévus, chaque revêtement semi-transparent étant formé sur une piste de signal d'information et sur la piste à fréquence unique adjacente.
